# EUROPÄISCHE PATENTANMELDUNG

(11) **EP 4 415 137 A1**
(43) Veröffentlichungstag der Anmeldung: **14.08.2024**
(21) Anmeldenummer: 24151940.4
(22) Anmeldetag: 15.01.2024
(51) Int. Cl.: H01M 50/202, H01M 50/207

(54) **AKKUPACKVORRICHTUNG, AKKUPACK UND VERFAHREN ZUR HERSTELLUNG EINER AKKUPACK-VORRICHTUNG**

(30) Priorität: 30.01.2023 DE 102023200712
(71) Anmelder: Robert Bosch GmbH, 70442 Stuttgart (DE)
(72) Erfinder: Kneer, Florian, 73105 Duernau (DE); Rejman, Marcin, 71334 Waiblingen (DE)

(57) **Zusammenfassung**

Die Erfindung geht aus von einer Akkupackvorrichtung (10) mit zumindest einem Akkupackgehäuse (12) und mit zumindest einer Schnittstelle (14) zu einer elektrischen und mechanischen Verbindung mit einem Verbraucher, die auf einer Schnittstellenseite (18) des Akkupackgehäuses (12) angeordnet ist, wobei die Schnittstelle (14) zumindest eine Kontaktaufnahme (20) aufweist, die benachbart zu einer Wandung (22) der Akkupackvorrichtung (10) angeordnet ist.

Es wird vorgeschlagen, dass die Wandung (22) gekrümmt ausgebildet ist.

## Beschreibung

### Stand der Technik

Es ist bereits eine Akkupackvorrichtung mit zumindest einem Akkupackgehäuse und mit zumindest einer Schnittstelle zu einer elektrischen und mechanischen Verbindung mit einem Verbraucher, die auf einer Schnittstellenseite des Akkupackgehäuses angeordnet ist, wobei die Schnittstelle zumindest eine Kontaktaufnahme aufweist, die benachbart zu einer Wandung angeordnet ist, vorgeschlagen worden.

### Offenbarung der Erfindung

Die Erfindung geht aus von einer Akkupackvorrichtung mit zumindest einem Ackupackgehäuse und mit zumindest einer Schnittstelle zu einer elektrischen und mechanischen Verbindung mit einem Verbraucher, die auf einer Schnittstellenseite des Akkupackgehäuses angeordnet ist, wobei die Schnittstelle zumindest eine Kontaktaufnahme aufweist, die benachbart zu einer Wandung der Akkupackvorrichtung angeordnet ist.

Es wird vorgeschlagen, dass die Wandung gekrümmt ausgebildet ist.

Durch eine derartige Ausgestaltung der Akkupackvorrichtung kann eine besonders hohe Robustheit erreicht werden. Es kann eine besonders strapazierfähige und stabile Akkupackvorrichtung zur Verfügung gestellt werden. Vorteilhaft kann eine besonders hohe Sicherheit erreicht werden. Es kann vorteilhaft eine besonders hohe Produktqualität erreicht werden. Eine derartige Ausgestaltung der Akkupackvorrichtung ermöglicht eine Reduzierung von Spannungsspitzen und/oder eine Verbesserung eines Kraftflusses. Vorteilhaft kann einem durch Spannungsspitzen erzeugten Reißen der Akkupackvorrichtung und/oder der Schnittstelle besonders einfach und/oder effektiv entgegengewirkt werden.

Die Schnittstelle ist insbesondere zumindest teilweise einstückig mit dem Akkupackgehäuse ausgebildet. Darunter, dass "zumindest eine Einheit oder ein Objekt und zumindest eine weitere Einheit oder ein weiteres Objekt zumindest teilweise einstückig miteinander ausgebildet sind" soll insbesondere verstanden werden, dass zumindest ein Element der Einheit oder des Objekts einstückig mit zumindest einem weiteren Element der weiteren Einheit oder dem weiteren Objekt ausgebildet ist. Unter "einstückig" kann zumindest stoffschlüssig verbunden verstanden werden, beispielsweise durch einen Schweißprozess, einen Lötprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Die Akkupackvorrichtung ist vorzugsweise Teil eines Akkupacks, insbesondere eines Handwerkzeugmaschinenakkupacks. Die Kontaktaufnahme weist beispielsweise ein elektrisches Kontaktelement oder mehrere elektrische Kontaktelemente auf. Der Akkupack, insbesondere die Akkupackvorrichtung, weist bevorzugt eine Akkuzelleneinheit auf. Die Akkuzelleneinheit weist vorzugsweise eine Akkuzelle oder mehrere, insbesondere miteinander geschaltete, Akkuzellen auf. Das zumindest eine elektrische Kontaktelement kann insbesondere als Kontaktstecker oder als Kontaktschwert ausgebildet sein.

Das zumindest eine elektrische Kontaktelement ist insbesondere dazu vorgesehen, eine elektrische Verbindung zwischen der Akkuzelleneinheit und dem Verbraucher, insbesondere einer Akkupackschnittstelle des Verbrauchers, herzustellen. Unter "vorgesehen" soll speziell eingerichtet, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Der Verbraucher ist bevorzugt als eine Handwerkzeugmaschine, beispielsweise als eine Bohrmaschine, als eine Schraubmaschine, als eine Sägemaschine, als eine Schleifmaschine oder als eine andere, einem Fachmann als sinnvoll erscheinende Handwerkzeugmaschine ausgebildet. Alternativ ist denkbar, dass der Verbraucher als ein Haushaltsgerät, beispielsweise als eine Küchenmaschine, als ein Reinigungsgerät, insbesondere als ein Staubsauger, als ein Radio, als eine Leuchte oder als ein anderes, einem Fachmann als sinnvoll erscheinendes Elektrogerät ausgebildet ist.

Die Schnittstelle weist insbesondere eine mechanische Verbindungseinheit zu einer mechanischen Verbindung des Akkupacks, insbesondere der Akkupackvorrichtung, mit dem Verbraucher auf. Vorzugsweise ist mittels der mechanischen Verbindungseinheit die Akkupackvorrichtung, bevorzugt lösbar, besonders bevorzugt zerstörungsfrei lösbar, an dem Verbraucher befestigbar. Die mechanische Verbindungseinheit weist insbesondere zumindest eine Führungsschiene, bevorzugt zwei Führungsschienen, auf. Vorzugsweise ist der Verbraucher zu einer Montage und/oder Demontage des Verbrauchers an/von dem Akkupack, insbesondere der Akkupackvorrichtung, an der Führungsschiene entlangführbar. Die Führungsschiene ist insbesondere als Halteschiene für den Verbraucher vorgesehen.

Die Schnittstellenseite ist insbesondere in einem an dem Verbraucher angeordneten Zustand des Akkupacks, vorzugsweise der Akkupackvorrichtung, dem Verbraucher zugewandt. Die Wandung ist bevorzugt einstückig mit zumindest einem Teil des Akkupackgehäuses und/oder zumindest einem Teil der Schnittstelle ausgebildet. Die Wandung ist insbesondere zwischen der Schnittstelle, insbesondere der Kontaktaufnahme, und dem Akkupackgehäuse angeordnet. Bevorzugt verbindet die Wandung das Akkupackgehäuse mit der Schnittstelle, insbesondere mit der Kontaktaufnahme, insbesondere zumindest in einem Teilbereich der Acku packvorrichtu ng.

Die Schnittstelle weist insbesondere ein Schnittstellengehäuse auf. Das Schnittstellengehäuse ist zumindest teilweise einstückig mit dem Akkupackgehäuse und/oder der Wandung ausgebildet. Die Wandung schließt insbesondere an eine Außenfläche der Schnittstelle, vorzugsweise des Schnittstellengehäuses, an. Die Wandung schließt insbesondere an einer Außenfläche des Akkupackgehäuses an. Die Außenfläche des Akkupackgehäuses verläuft vorzugsweise winklig zu der Außenfläche des Schnittstellengehäuses. Unter "winklig" soll insbesondere in einem Winkel größer 0° und kleiner 180° verstanden werden. Vorzugsweise verläuft die Außenfläche des Akkupackgehäuses zumindest im Wesentlichen senkrecht zu der Außenfläche der Schnittstelle, insbesondere des Schnittstellengehäuses. Unter "im Wesentlichen senkrecht" kann eine Ausrichtung einer Richtung relativ zu einer Bezugsrichtung verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Wandung weist vorzugsweise eine konstante Krümmung auf. Alternativ ist denkbar, dass die Wandung eine variierende Krümmung aufweist. Die Wandung definiert vorzugsweise einen Kreisbogen mit einem Mittelpunktswinkel von zwischen 0° und 180°, bevorzugt 90°.

Des Weiteren wird vorgeschlagen, dass das Akkupackgehäuse auf der Schnittstellenseite eine erste Oberfläche und eine gegenüber der ersten Oberfläche vertiefte zweite Oberfläche aufweist, wobei die Wandung zumindest teilweise in einem Bereich der zweiten Oberfläche angeordnet ist. Vorteilhaft kann eine besonders kompakte Akkupackvorrichtung zur Verfügung gestellt werden. Es kann ohne einen erhöhten Platzbedarf eine besonders robuste Akkupackvorrichtung realisiert werden. Unter "zumindest teilweise" kann zu zumindest 10 %, bevorzugt zu zumindest 25 % und besonders bevorzugt zu zumindest 40 % eines Gesamtvolumens und/oder einer Gesamtmasse eines Objekts, insbesondere der Wandung, verstanden werden. Bevorzugt ist die Wandung zumindest im Wesentlichen vollständig in dem Bereich der zweiten Oberfläche angeordnet, zumindest betrachtet in einer zu der zweiten Oberfläche senkrecht verlaufenden Richtung. Unter "zumindest im Wesentlichen vollständig" kann zu zumindest 50 %, bevorzugt zu zumindest 75 % und besonders bevorzugt zu zumindest 90 % eines Gesamtvolumens und/oder einer Gesamtmasse eines Objekts, insbesondere der Wandung, verstanden werden. Insbesondere ist die Wandung auf der zweiten Oberfläche angeordnet. Die erste Oberfläche ist vorzugsweise auf der Schnittstellenseite angeordnet. Die zweite Oberfläche ist vorzugsweise auf der Schnittstellenseite angeordnet. Die erste Oberfläche verläuft bevorzugt zumindest im Wesentlichen parallel zu der zweiten Oberfläche. Unter "im Wesentlichen parallel" kann hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Alternativ ist jedoch auch denkbar, dass die erste Oberfläche winklig zu der zweiten Oberfläche verläuft. Ein Wert einer maximalen Höhe der Wandung entspricht vorzugsweise einem Wert eines minimalen Abstands der ersten Oberfläche zu der zweiten Oberfläche, insbesondere zumindest betrachtet in einer zu der ersten Oberfläche und/oder zweiten Oberfläche senkrecht verlaufenden Richtung. Alternativ ist denkbar, dass ein Wert der maximalen Höhe der Wandung kleiner oder größer ist als ein Wert des minimalen Abstands der ersten Oberfläche zu der zweiten Oberfläche, insbesondere zumindest betrachtet in der zu der ersten Oberfläche und/oder zweiten Oberfläche senkrecht verlaufenden Richtung. Die zweite Oberfläche ist insbesondere bezüglich der Schnittstelle gegenüber der ersten Oberfläche vertieft angeordnet. Die erste Oberfläche und die zweite Oberfläche definieren insbesondere jeweils eine Ebene, wobei die Wandung vorzugsweise zumindest teilweise, bevorzugt zumindest im Wesentlichen vollständig und besonders bevorzugt vollständig zwischen den Ebenen angeordnet ist. Die zweite Oberfläche entspricht vorzugsweise der zuvor bereits genannten Außenfläche des Akkupackgehäuses. Die Schnittstelle, insbesondere das Schnittstellengehäuse, ist vorzugsweise zumindest teilweise, bevorzugt zumindest im Wesentlichen vollständig auf der ersten Oberfläche angeordnet.

Zudem wird vorgeschlagen, dass zumindest ein einer Montagerichtung der Schnittstelle zugewandter Teil der Wandung in dem Bereich der zweiten Oberfläche angeordnet ist. Vorteilhaft kann einer Beschädigung der Schnittstelle und/oder des Akkupackgehäuses, insbesondere in einem Übergangsbereich zwischen der Schnittstelle und dem Akkupackgehäuse, vorzugsweise bei einem Verbinden mit und/oder Lösen von dem Verbraucher, konstruktiv einfach und/oder effektiv entgegengewirkt werden. Vorteilhaft können Spannungsspitzen an besonders kritischen Stellen reduziert werden. Bevorzugt ist die Wandung zumindest im Wesentlichen vollständig auf einer der Montagerichtung zugewandten Seite der Schnittstelle angeordnet. Die Montagerichtung verläuft bevorzugt zumindest im Wesentlichen parallel zu der zumindest einen Führungsschiene, insbesondere einer Haupterstreckungsachse der zumindest einen Führungsschiene. Unter einer "Haupterstreckungsachse" eines Objekts kann dabei insbesondere eine Achse verstanden werden, welche parallel zu einer längsten Kante eines kleinsten geometrischen Quaders verläuft, welcher das Objekt gerade noch vollständig umschließt, und insbesondere durch den Mittelpunkt des Quaders verläuft. Die erste Oberfläche und/oder die zweite Oberfläche verlaufen/verläuft insbesondere zumindest im Wesentlichen parallel zu der Montagerichtung. Die Montagerichtung entspricht insbesondere einer Bewegungsrichtung des Verbrauchers relativ zu dem Akkupack, insbesondere der Akkupackvorrichtung bei einer Montage des Verbrauchers an dem Akkupack, vorzugsweise der Akkupackvorrichtung, bevorzugt der Schnittstelle. Insbesondere erfolgt bei einer Demontage des Verbrauchers von der Akkupackvorrichtung, vorzugsweise von dem Akkupack, eine Bewegung des Verbrauchers relativ zu der Akkupackvorrichtung, insbesondere zu dem Akkupack, entgegen der Montagerichtung. Eine Haupterstreckungsachse der Wandung verläuft bevorzugt zumindest im Wesentlichen senkrecht zu der Montagerichtung. Die Haupterstreckungsachse der Wandung verläuft insbesondere zumindest im Wesentlichen senkrecht zu der zumindest einen Führungsschiene, vorzugsweise der Haupterstreckungsachse der zumindest einen Führungsschiene.

Weiterhin wird vorgeschlagen, dass der Bereich der zweiten Oberfläche zumindest auf einer einer, insbesondere der zuvor bereits genannten, Montagerichtung der Schnittstelle zugewandten Seite der Schnittstelle angeordnet ist. Vorteilhaft kann einer Beschädigung der Schnittstelle und/oder des Akkupackgehäuses, insbesondere in einem Übergangsbereich zwischen der Schnittstelle und dem Akkupackgehäuse, vorzugsweise bei einem Verbinden mit und/oder Lösen von dem Verbraucher, konstruktiv einfach, effektiv und/oder platzsparend entgegengewirkt werden. Vorteilhaft können Spannungsspitzen an besonders kritischen Stellen besonders platzsparend reduziert werden. Die erste Oberfläche ist insbesondere in einer zu der Montagerichtung parallel verlaufenden Richtung betrachtet der zweiten Oberfläche nachfolgend angeordnet.

Ferner wird vorgeschlagen, dass die Schnittstelle zumindest eine, insbesondere die zuvor bereits genannte, Führungsschiene und zumindest eine flexible Einheit aufweist, die zumindest teilweise an der Führungsschiene angeordnet ist. Vorteilhaft kann eine besonders robuste Akkupackvorrichtung zur Verfügung gestellt werden. Es kann konstruktiv einfach und/oder besonders effektiv Beschädigungen des Akkupackgehäuses, der Schnittstelle und/oder dem Verbraucher durch Stöße oder dergleichen entgegengewirkt werden. Es kann eine besonders langlebige und/oder zuverlässige Akkupackvorrichtung zur Verfügung gestellt werden. Die flexible Einheit ist insbesondere dazu vorgesehen, Stöße auf den Verbraucher und/oder die Akkupackvorrichtung, vorzugsweise die Schnittstelle und/oder das Akkupackgehäuse, zu dämpfen. Die flexible Einheit kann beispielsweise ein flexibles, insbesondere elastisches, Element oder mehrere flexible, insbesondere elastische, Elemente aufweisen.

Außerdem wird vorgeschlagen, dass die flexible Einheit zumindest ein, insbesondere das zuvor bereits genannte, flexible/s, vorzugsweise elastische/s, Element aufweist, welches auf einer dem Akkupackgehäuse zugewandten Seite der Führungsschiene angeordnet ist. Vorteilhaft kann eine besonders zuverlässige Fixierung der Akkupackvorrichtung an dem Verbraucher realisiert werden. Es kann eine besonders schonende und gleichzeitig präzise Fixierung der Akkupackvorrichtung an dem Verbraucher erreicht werden. Vorteilhaft kann eine besonders langlebige Akkupackvorrichtung realisiert werden. Das flexible Element ist bevorzugt auf einer dem Akkupackgehäuse gegenüberliegenden Oberfläche der Führungsschiene angeordnet. Vorzugsweise ist das flexible Element zwischen der Führungsschiene und dem Akkupackgehäuse angeordnet. Bevorzugt ist das flexible Element beabstandet zu dem Akkupackgehäuse angeordnet. Das flexible Element ist vorzugsweise an der Führungsschiene befestigt. Das flexible Element ist insbesondere in Richtung der Führungsschiene, vorzugsweise elastisch, auslenkbar, bevorzugt um Stöße auf die Führungsschiene abzudämpfen. Es ist denkbar, dass das flexible Element einstückig mit der Führungsschiene ausgebildet ist, oder dass das flexible Element lösbar, insbesondere zerstörungsfrei lösbar, an der Führungsschiene befestigt ist. Das elastische Element ist beispielsweise an zwei Stellen oder alternativ an lediglich einer Stelle der Führungsschiene befestigt. Es ist beispielsweise denkbar, dass das flexible Element durch Umspritzung, Verkrallen, Heißverstemmen oder dergleichen an der Führungsschiene befestigt ist. Das flexible Element liegt vorzugsweise in einem an dem Verbraucher angeordneten Zustand der Schnittstelle an dem Verbraucher, insbesondere an der Akkupackschnittstelle des Verbrauchers, an. Bevorzugt ist das flexible Element in einem an der Akkupackvorrichtung angeordneten Zustand des Verbrauchers vorgespannt. Eine Vorspannung des flexiblen Elements ist insbesondere durch eine Verbindung des Verbrauchers mit der Schnittstelle erzeugbar. Alternativ oder zusätzlich ist auch denkbar, dass die flexible Einheit zumindest ein, insbesondere das zuvor bereits genannte, flexible/s, vorzugsweise elastische/s, Element aufweist, welches auf einer dem Akkupackgehäuse abgewandten Seite der Führungsschiene angeordnet ist. Ferner ist alternativ oder zusätzlich denkbar, dass die flexible Einheit zumindest ein, insbesondere das zuvor bereits genannte, flexible/s, vorzugsweise elastische/s, Element aufweist, welches an dem Akkupackgehäuse angeordnet, vorzugsweise befestigt, ist, bevorzugt auf der Schnittstellenseite.

Des Weiteren wird vorgeschlagen, dass das flexible Element als eine Blattfeder ausgebildet ist. Vorteilhaft kann eine besonders zuverlässige und/oder präzise Fixierung des Verbrauchers an der Akkupackvorrichtung, insbesondere an der Schnittstelle, kostengünstig realisiert werden. Das elastische Element ist bevorzugt als Stanzbiegeteil ausgebildet. Das elastische Element kann beispielsweise aus einem Metall, aus einem Kunststoff oder dergleichen ausgebildet sein. Alternativ ist auch denkbar, dass das flexible Element als ein gummielastisches Element, beispielsweise als eine Gummiplatte, als ein Gummiwürfel oder dergleichen, als eine Schraubenfeder, als eine Schenkelfeder oder dergleichen ausgebildet ist.

Zudem wird vorgeschlagen, dass die flexible Einheit zumindest, insbesondere das zuvor bereits genannte, ein flexible/s, vorzugsweise elastische/s Element, aufweist, welches zwischen zwei zueinander zumindest im Wesentlichen parallel verlaufenden Montagerippen der Führungsschiene angeordnet ist. Vorteilhaft kann eine besonders platzsparende flexible Einheit zur Verfügung gestellt werden. Vorteilhaft kann eine kompakte und gleichzeitig besonders robuste und/oder langlebige Akkupackvorrichtung bereitgestellt werden. Die Montagerippen weisen insbesondere jeweils eine Führungsfläche auf, entlang derer der Verbraucher bei einer Montage an und/oder einer Demontage von der Akkupackvorrichtung, vorzugsweise der Schnittstelle, führbar ist. Die Montagerippen sind vorzugsweise auf zueinander abgewandten Seiten der Führungsschiene angeordnet. Eine Montagerippe der Montagerippen ist insbesondere auf einer zu dem Akkupackgehäuse zugewandten Seite der Führungsschiene angeordnet. Eine weitere Montagerippe der Montagerippen ist insbesondere auf einer zu dem Akkupackgehäuse abgewandten Seite der Führungsschiene angeordnet. Die weitere Montagerippe ist vorzugsweise stärker ausgebildet als die Montagerippe. Alternativ ist denkbar, dass die Montagerippe und die weitere Montagerippe die gleiche Stärke aufweisen, oder dass die Montagerippe stärker ausgebildet ist als die weitere Montagerippe. Die Montagerippen verlaufen bevorzugt zumindest im Wesentlichen parallel zueinander. Die Montagerippen verlaufen vorzugsweise zumindest im Wesentlichen parallel zu der Montagerichtung und/oder zu der Haupterstreckungsachse der Führungsschiene. Alternativ ist denkbar, dass die Montagerippen winklig zueinander verlaufen. Alternativ ist auch denkbar, dass die Montagerippen, insbesondere die Montagerippe und/oder die weitere Montagerippe, winklig zu der Montagerichtung und/oder zu der Haupterstreckungsachse der Führungsschiene verlaufen. Das flexible Element erstreckt sich vorzugsweise zumindest über einen Teil einer maximalen Längserstreckung der Führungsschiene, insbesondere über zumindest 25 %, vorzugsweise über zumindest 50 % der maximalen Längserstreckung und bevorzugt zumindest im Wesentlichen über die gesamte maximale Längserstreckung der Führungsschiene, insbesondere über zumindest 75 % und besonders bevorzugt über zumindest 90 % der maximalen Längserstreckung der Führungsschiene.

Weiterhin wird vorgeschlagen, dass die zumindest eine Führungsschiene eine Aufnahmekammer für ein, insbesondere das zuvor bereits genannte, flexible/s, insbesondere elastische/s, Element aufweist, wobei die Aufnahmekammer im montierten Zustand vollständig geschlossen oder einseitig offen ausgebildet ist. Vorteilhaft kann eine besonders platzsparende flexible Einheit zur Verfügung gestellt werden. Vorteilhaft kann eine kompakte und gleichzeitig besonders robuste und/oder langlebige Akkupackvorrichtung bereitgestellt werden. Das flexible Element ist, insbesondere in zumindest einem Ausführungsbeispiel, als ein flexibles Schichtelement ausgebildet. Das flexible Element ist beispielsweise plattenförmig ausgebildet. Darunter, dass ein Objekt "zumindest im Wesentlichen plattenförmig" ausgestaltet ist, soll insbesondere verstanden werden, dass zumindest ein kleinstmöglicher geometrischer Quader, welcher das Objekt gerade noch vollständig umschließt, plattenförmig ist. Darunter, dass ein Objekt "plattenförmig" ausgestaltet ist, soll insbesondere ein räumliches Objekt verstanden werden, das, in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50 %, vorzugsweise weniger als 25 % und besonders bevorzugt weniger als 10 % einer Flächenerstreckung des räumlichen Elements parallel zur Ebene, insbesondere einer kleinsten Flächenerstreckung des Elements parallel zur Ebene, beträgt. Alternativ ist jedoch auch denkbar, dass das flexible Element eine andere, insbesondere von einer zumindest im Wesentlichen plattenförmigen Form verschiedene, Form aufweist, beispielsweise rohrförmig, balkenförmig, prismenförmig, oder dergleichen. Vorzugsweise füllt das flexible Element die Aufnahmekammer zumindest im Wesentlichen vollständig aus. Es ist denkbar, dass das flexible Element in der Aufnahmekammer verklemmt und/oder verklebt ist. Es ist auch denkbar, dass das flexible Element zumindest teilweise oder zumindest im Wesentlichen vollständig von dem Schnittstellengehäuse umspritzt ist. Das Schnittstellengehäuse, insbesondere die Führungsschiene, ist vorzugsweise, insbesondere zumindest teilweise, bevorzugt zumindest im Wesentlichen vollständig, aus einem Hartplastik, beispielsweise aus einem glasfasergefüllten Thermoplast, insbesondere einem Polyamid mit Glasfaserfüllung, einem Polycarbonat, einem Copolymer, einem Gemisch aus einem Polycarbonat und einem Acrylnitril-Butadien-Styrol-Copolymer oder dergleichen, gebildet. Das flexible Element weist besonders bevorzugt eine Härte auf, die geringer ist als eine Härte der Führungsschiene. Das flexible Element weist bevorzugt eine Flexibilität auf, die höher ist als eine Flexibilität der Führungsschiene. Das flexible Element weist bevorzugt einen Shore A - Messwert von größer 60 und vorzugsweise kleiner 90 auf. Alternativ ist jedoch auch denkbar, dass der Shore A - Messwert kleiner 60 oder größer 90 ist. Das flexible Element weist besonders bevorzugt eine Elastizität auf, die höher ist als eine Elastizität der Führungsschiene. Eine Bruchdehnung des flexiblen Elements beträgt vorzugsweise zumindest 100%. Die Aufnahmekammer erstreckt sich vorzugsweise zumindest über einen Teil einer maximalen Längserstreckung der Führungsschiene, insbesondere über zumindest 25 %, vorzugsweise über zumindest 50 % der maximalen Längserstreckung und bevorzugt zumindest im Wesentlichen über die gesamte maximale Längserstreckung der Führungsschiene, insbesondere über zumindest 75 % und besonders bevorzugt über zumindest 90 % der maximalen Längserstreckung der Führungsschiene. Die Aufnahmekammer ist insbesondere zwischen der Montagerippe und der weiteren Montagerippe angeordnet. Es ist auch denkbar, dass die zumindest eine Führungsschiene mehrere Aufnahmekammern für jeweils ein flexibles, insbesondere elastisches, Element aufweist. Ferner ist denkbar, dass in der Aufnahmekammer mehrere flexible, insbesondere elastische, Elemente anordenbar sind.

Ferner wird vorgeschlagen, dass das flexible, insbesondere elastische, Element als eine Elastomerfüllung ausgebildet ist, wobei die Elastomerfüllung insbesondere aus entropieplastischen Material ausgebildet ist. Vorteilhaft kann eine besonders einfache und/oder kostengünstige Herstellung der flexiblen Einheit erreicht werden.

Außerdem wird ein, insbesondere der zuvor bereits genannte, Akkupack mit der Akkupackvorrichtung vorgeschlagen. Vorteilhaft kann ein besonders robuster und/oder langlebiger Akkupack zur Verfügung gestellt werden.

Des Weiteren geht die Erfindung aus von einem Verfahren zur Herstellung einer Akkupackvorrichtung, insbesondere der zuvor bereits genannten, Akkupackvorrichtung mit einem, insbesondere dem zuvor bereits genannten, Akkupackgehäuse und mit zumindest einer, insbesondere der zuvor bereits genannten, Schnittstelle zu einer elektrischen und mechanischen Verbindung mit einem, insbesondere dem zuvor bereits genannten, Verbraucher, wobei die Schnittstelle zumindest eine, insbesondere die zuvor bereits genannte, Kontaktaufnahme aufweist, die benachbart zu einer, insbesondere der zuvor bereits genannten, Wandung der Akkupackvorrichtung angeordnet ist. Es wird vorgeschlagen, dass die Wandung zumindest teilweise gekrümmt ausgebildet wird. Durch eine derartige Ausgestaltung des Verfahrens kann eine besonders hohe Robustheit der Akkupackvorrichtung erreicht werden. Es kann ein besonders strapazierfähige und stabile Akkupackvorrichtung zur Verfügung gestellt werden. Vorteilhaft kann eine besonders hohe Sicherheit erreicht werden. Es kann vorteilhaft eine besonders hohe Produktqualität erreicht werden. Eine derartige Ausgestaltung der Akkupackvorrichtung ermöglicht eine Reduzierung von Spannungsspitzen und/oder eine Verbesserung eines Kraftflusses. Vorteilhaft kann einem durch Spannungsspitzen erzeugten Reißen der Akkupackvorrichtung und/oder der Schnittstelle besonders einfach und/oder effektiv entgegengewirkt werden.

Die Akkupackvorrichtung, der Akkupack und/oder das Verfahren sollen/soll hierbei nicht auf die oben beschriebene Anwendung und Ausführungsform beschränkt sein. Insbesondere können/kann die Akkupackvorrichtung, der Akkupack und/oder das Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Akkupack mit einer Akkupackvorrichtung in einer schematischen Darstellung,
- Fig. 2: einen schematischen Ablauf eines Verfahrens zur Herstellung der Akkupackvorrichtung,
- Fig. 3: einen Akkupack mit einer Akkupackvorrichtung in einer ersten alternativen Ausführung in einer schematischen Darstellung,
- Fig. 4: einen Akkupack mit einer Akkupackvorrichtung in einer zweiten alternativen Ausführung in einer Querschnittsdarstellung,
- Fig. 5: die Akkupackvorrichtung aus Figur 4 in Verbindung mit einem Verbraucher in einer Querschnittsdarstellung und
- Fig. 6: einen Akkupack mit einer Akkupackvorrichtung in einer dritten alternativen Ausführung einer schematischen Darstellung.

### Beschreibung der Ausführungsbeispiele

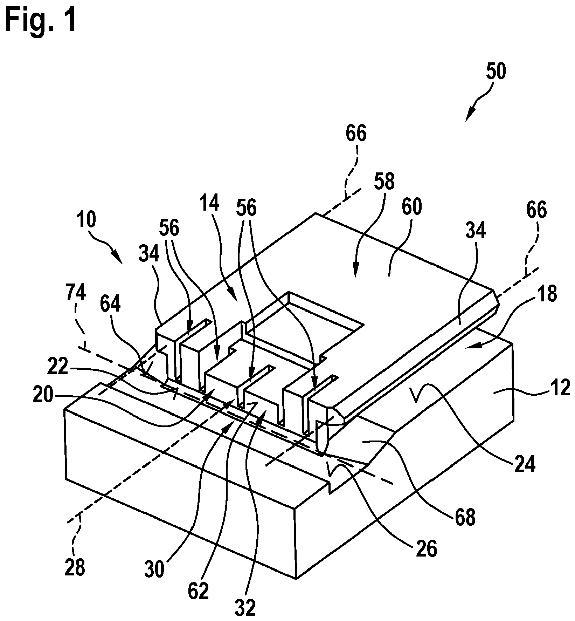

Figur 1 zeigt einen Akkupack 50 mit einer Akkupackvorrichtung 10. Der Akkupack 50 ist hier beispielhaft als ein Handwerkzeugmaschinenakkupack ausgebildet. Die Akkupackvorrichtung 10 weist ein Akkupackgehäuse 12 auf. Die Akkupackvorrichtung 10 weist zumindest eine Schnittstelle 14 zu einer elektrischen und mechanischen Verbindung mit einem Verbraucher auf. Die Schnittstelle 14 ist insbesondere zumindest teilweise einstückig mit dem Akkupackgehäuse 12 ausgebildet.

Die Schnittstelle 14 ist auf einer Schnittstellenseite 18 des Akkupackgehäuses 12 angeordnet. Die Schnittstelle 14 weist zumindest eine Kontaktaufnahme 20 auf. Die Kontaktaufnahme 20 weist mehrere elektrische Kontaktelemente 56 auf. Alternativ ist denkbar, dass die Kontaktaufnahme 20 lediglich ein elektrisches Kontaktelement 56 aufweist. Der Akkupack 50, insbesondere die Akkupackvorrichtung 10, weist eine Akkuzelleneinheit (hier nicht dargestellt) auf. Die Akkuzelleneinheit weist eine Akkuzelle oder mehrere, insbesondere miteinander geschaltete, Akkuzellen auf. Die elektrischen Kontaktelemente 56 sind als Kontaktstecker ausgebildet. Alternativ ist denkbar, dass zumindest ein Teil der elektrischen Kontaktelemente 56 als Kontaktschwerter oder dergleichen ausgebildet sind. Die elektrischen Kontaktelemente 56 sind dazu vorgesehen, eine elektrische Verbindung der Akkuzelleneinheit und dem Verbraucher, insbesondere einer Akkupackschnittstelle des Verbrauchers, herzustellen.

Der Verbraucher ist bevorzugt als eine Handwerkzeugmaschine, beispielsweise als eine Bohrmaschine, als eine Schraubmaschine, als eine Sägemaschine, als eine Schleifmaschine oder als eine andere, einem Fachmann als sinnvoll erscheinende Handwerkzeugmaschine ausgebildet. Alternativ ist denkbar, dass der Verbraucher als ein Haushaltsgerät, beispielsweise als eine Küchenmaschine, als ein Reinigungsgerät, insbesondere als ein Staubsauger, als ein Radio, als eine Leuchte oder als ein anderes, einem Fachmann als sinnvoll erscheinendes Elektrogerät ausgebildet ist.

Die Schnittstelle 14 weist eine mechanische Verbindungseinheit 58 zu einer mechanischen Verbindung des Akkupacks 50, insbesondere der Akkupackvorrichtung 10, mit dem Verbraucher auf. Mittels der mechanischen Verbindungseinheit 58 ist die Akkupackvorrichtung 10, bevorzugt lösbar, besonders bevorzugt zerstörungsfrei lösbar, an dem Verbraucher befestigbar. Die mechanische Verbindungseinheit 58 weist zwei Führungsschienen 34 auf. Der Verbraucher ist zu einer Montage und/oder Demontage des Verbrauchers an/von dem Akkupack 50, insbesondere der Akkupackvorrichtung 10, an den Führungsschienen 34 entlangführbar. Die Führungsschienen 34 sind als Halteschienen für den Verbraucher vorgesehen. Die Schnittstellenseite 14 ist in einem an dem Verbraucher angeordneten Zustand des Akkupacks 50, vorzugsweise der Akkupackvorrichtung 10, dem Verbraucher zugewandt.

Die Kontaktaufnahme 20 ist benachbart zu einer Wandung 22 der Akkupackvorrichtung 10 angeordnet. Die Wandung 22 ist einstückig mit zumindest einem Teil des Akkupackgehäuses 12 ausgebildet. Die Wandung 22 ist einstückig mit zumindest einem Teil der Schnittstelle 14 ausgebildet. Die Wandung 22 ist zwischen der Schnittstelle 14, insbesondere der Kontaktaufnahme 20, und dem Ackupackgehäuse 12 angeordnet. Die Wandung 22 verbindet das Akkupackgehäuse 12 mit der Schnittstelle 14, insbesondere mit der Kontaktaufnahme 20, insbesondere zumindest in einem Teilbereich der Akkupackvorrichtung 10.

Die Wandung 22 ist gekrümmt ausgebildet. Die Wandung 22 weist eine konstante Krümmung auf. Alternativ ist denkbar, dass die Wandung 22 eine variierende Krümmung aufweist. Die Wandung 22 definiert einen Kreisbogen mit einem Mittelpunktswinkel von zwischen 0° und 180°, bevorzugt 90°.

Die Schnittstelle 14 weist ein Schnittstellengehäuse 60 auf. Das Schnittstellengehäuse 60 ist zumindest teilweise einstückig mit dem Akkupackgehäuse 12 und/oder der Wandung 22 ausgebildet. Die Wandung 22 schließt an eine Außenfläche 62 der Schnittstelle 14, vorzugsweise des Schnittstellengehäuses 60, an. Die Wandung 20 schließt an eine Außenfläche 64 des Akkupackgehäuses 12 an. Die Außenfläche 64 des Akkupackgehäuses 12 verläuft winklig zu der Außenfläche 62 des Schnittstellengehäuses 60. Die Außenfläche 64 des Akkupackgehäuses 12 verläuft insbesondere zumindest im Wesentlichen senkrecht zu der Außenfläche 64 der Schnittstelle 14, vorzugsweise des Schnittstellengehäuses 60.

Das Akkupackgehäuse 12 weist auf der Schnittstellenseite 18 eine erste Oberfläche 24 und eine gegenüber der ersten Oberfläche 24 vertiefte zweite Oberfläche 26 auf. Die Wandung 22 ist zumindest teilweise in einem Bereich 30 der zweiten Oberfläche 26 angeordnet. Die Wandung 22 ist zumindest im Wesentlichen vollständig in dem Bereich 30 der zweiten Oberfläche 26 angeordnet, zumindest betrachtet in einer zu der zweiten Oberfläche 26 senkrecht verlaufenden Richtung. Die Wandung 22 ist auf der zweiten Oberfläche 26 angeordnet. Die erste Oberfläche 24 ist auf der Schnittstellenseite 18 angeordnet. Die zweite Oberfläche 26 ist auf der Schnittstellenseite 18 angeordnet. Die erste Oberfläche 24 verläuft zumindest im Wesentlichen parallel zu der zweiten Oberfläche 26. Alternativ ist jedoch auch denkbar, dass die erste Oberfläche 24 winklig zu der zweiten Oberfläche 26 verläuft.

Ein Wert einer maximalen Höhe der Wandung 22 entspricht einem Wert eines minimalen Abstands der ersten Oberfläche 24 zu der zweiten Oberfläche 26, insbesondere zumindest betrachtet in einer zu der ersten Oberfläche 24 und/oder zweiten Oberfläche 26 senkrecht verlaufenden Richtung. Alternativ ist denkbar, dass ein Wert der maximalen Höhe der Wandung 22 kleiner oder größer ist als ein Wert des minimalen Abstands der ersten Oberfläche 24 zu der zweiten Oberfläche 26, insbesondere zumindest betrachtet in der zu der ersten Oberfläche 24 und/oder zweiten Oberfläche 26 senkrecht verlaufenden Richtung. Die zweite Oberfläche 26 ist bezüglich der Schnittstelle 14 gegenüber der ersten Oberfläche 24 vertieft angeordnet. Die erste Oberfläche 24 und die zweite Oberfläche 26 definieren jeweils eine Ebene, wobei die Wandung 22 vollständig zwischen den Ebenen angeordnet ist. Alternativ ist denkbar, dass die Wandung 22 zumindest teilweise zwischen den durch die erste Oberfläche 24 und die zweite Oberfläche 26 definierten Ebenen angeordnet ist. Die zweite Oberfläche 26 entspricht der zuvor bereits genannten Außenfläche 64 des Akkupackgehäuses 12. Die Schnittstelle 14, insbesondere das Schnittstellengehäuse 60, ist zumindest teilweise, bevorzugt zumindest im Wesentlichen vollständig auf der ersten Oberfläche 24 angeordnet.

Zumindest ein einer Montagerichtung 28 der Schnittstelle 14 zugewandter Teil der Wandung 22 ist in dem Bereich 30 der zweiten Oberfläche 26 angeordnet. Die Wandung 22 ist zumindest im Wesentlichen vollständig auf einer der Montagerichtung 28 zugewandten Seite der Schnittstelle 14 angeordnet. Die Montagerichtung 28 verläuft zumindest im Wesentlichen parallel zu den Führungsschienen 34, insbesondere jeweiligen Haupterstreckungsachsen 66 der Führungsschienen 34. Die erste Oberfläche 24 und/oder die zweite Oberfläche 26 verlaufen/verläuft zumindest im Wesentlichen parallel zu der Montagerichtung 28. Die Montagerichtung 28 entspricht einer Bewegungsrichtung des Verbrauchers relativ zu dem Akkupack 50, insbesondere der Akkupackvorrichtung 10 bei einer Montage des Verbrauchers an dem Akkupack 50, vorzugsweise der Akkupackvorrichtung 10, insbesondere der Schnittstelle 14.

Eine Haupterstreckungsachse 74 der Wandung 22 verläuft zumindest im Wesentlichen senkrecht zu der Montagerichtung 28. Die Haupterstreckungsachse 74 der Wandung 22 verläuft zumindest im Wesentlichen senkrecht zu den Führungsschienen 34, vorzugsweise den Haupterstreckungsachsen 66 der Führungsschienen 34.

Der Bereich 30 der zweiten Oberfläche 26 ist zumindest auf einer der Montagerichtung 28 der Schnittstelle 14 zugewandten Seite 32 der Schnittstelle 14 angeordnet. Die erste Oberfläche 24 ist in einer zu der Montagerichtung 28 parallel verlaufenden Richtung betrachtet der zweiten Oberfläche 26 nachfolgend angeordnet.

Zwischen der ersten Oberfläche 24 und der zweiten Oberfläche 26 ist eine weitere Oberfläche 68 angeordnet. Die weitere Oberfläche 68 verbindet die erste Oberfläche 24 mit der zweiten Oberfläche, insbesondere zumindest auf der Schnittstellenseite 18. Die weitere Oberfläche 68 verbindet die erste Oberfläche 24 mit der zweiten Oberfläche 26 rampenartig. Die weitere Oberfläche 68 verläuft winklig zu der ersten Oberfläche 24. Die weitere Oberfläche 68 verläuft winklig zu der zweiten Oberfläche 26. Die weitere Oberfläche 68 verläuft zu der ersten Oberfläche 24 in einem Winkel verschieden von 90°. Die weitere Oberfläche 68 verläuft zu der zweiten Oberfläche 26 in einem Winkel verschieden von 90°. Die weitere Oberfläche 68 ist zumindest im Wesentlichen vollständig zwischen den durch die erste Oberfläche 24 und die zweite Oberfläche 26 definierenden Ebenen angeordnet.

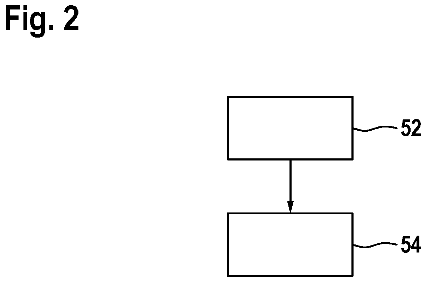

Figur 2 zeigt einen schematischen Ablauf eines Verfahrens zur Herstellung der Akkupackvorrichtung 10. In einem Verfahrensschritt 52 werden die Herstellungsmaterialien in einer Rohform bereitgestellt. In einem Verfahrensschritt, insbesondere in einem Herstellungsschritt 54, wird die Wandung 22 gekrümmt ausgebildet.

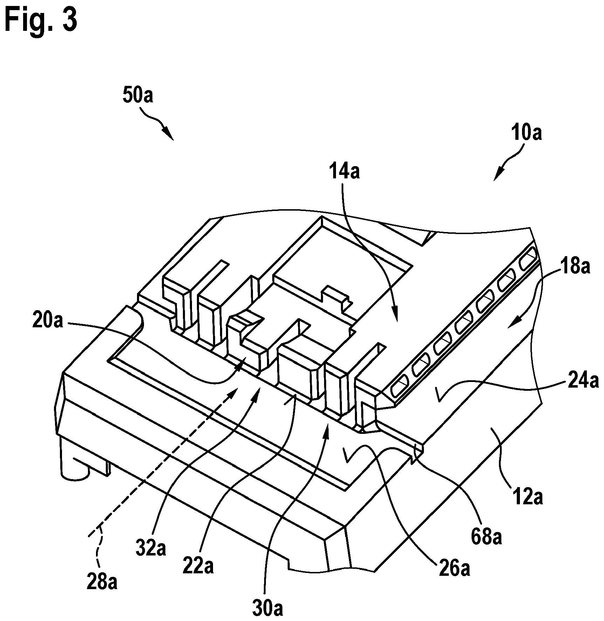

In den Figuren 3 bis 6 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist den Bezugszeichen des Ausführungsbeispiels in den Figuren 1 und 2 kein Buchstabe und der Ausführungsbeispiele in den Figuren 3 bis 6 die Buchstaben a bis c nachgestellt.

Figur 3 zeigt einen Akkupack 50a mit einer Akkupackvorrichtung 10a. Die Akkupackvorrichtung 10a weist ein Akkupackgehäuse 12a auf. Die Akkupackvorrichtung 10a weist zumindest eine Schnittstelle 14a zu einer elektrischen und mechanischen Verbindung mit einem Verbraucher auf. Die Schnittstelle 14a ist auf einer Schnittstellenseite 18a des Akkupackgehäuses 12a angeordnet. Die Schnittstelle 14a weist zumindest eine Kontaktaufnahme 20a auf. Die Kontaktaufnahme 20a ist benachbart zu einer Wandung 22a der Akkupackvorrichtung 10a angeordnet. Die Wandung 22a ist gekrümmt ausgebildet. Das Akkupackgehäuse 12a weist auf der Schnittstellenseite 18a eine erste Oberfläche 24a und eine gegenüber der ersten Oberfläche 24a vertiefte zweite Oberfläche 26a auf. Die Wandung 22a ist zumindest teilweise in einem Bereich 30a der zweiten Oberfläche 26a angeordnet.

Zwischen der ersten Oberfläche 24a und der zweiten Oberfläche 26a ist eine weitere Oberfläche 68a angeordnet. Die weitere Oberfläche 68a verbindet die erste Oberfläche 24a mit der zweiten Oberfläche 26a, insbesondere zumindest auf der Schnittstellenseite 18a. Die weitere Oberfläche 68a verbindet die erste Oberfläche 24a mit der zweiten Oberfläche 26a rampenartig. Die weitere Oberfläche 68a verläuft winklig zu der ersten Oberfläche 24a. Die weitere Oberfläche 68a verläuft winklig zu der zweiten Oberfläche 26a. Die weitere Oberfläche 68a verläuft zumindest im Wesentlichen senkrecht zu der ersten Oberfläche 24a. Die weitere Oberfläche 68a verläuft zumindest im Wesentlichen senkrecht zu der zweiten Oberfläche 26a. Die weitere Oberfläche 68a ist zumindest im Wesentlichen vollständig zwischen durch die erste Oberfläche 24a und die zweite Oberfläche 26a definierenden Ebenen angeordnet.

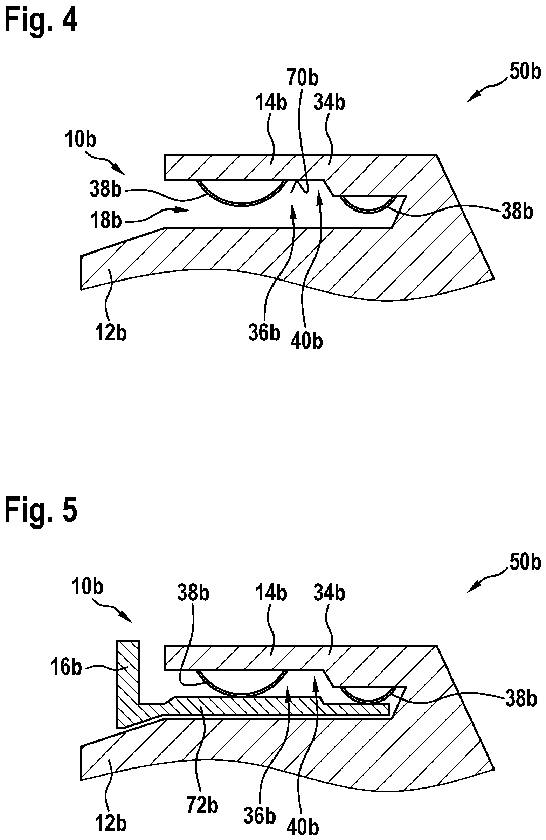

Die Figuren 4 und 5 zeigen einen Akkupack 50b mit einer Akkupackvorrichtung 10b. Die Akkupackvorrichtung 10b weist ein Akkupackgehäuse 12b auf. Die Ackupackvorrichtung 10b weist zumindest eine Schnittstelle 14b zu einer elektrischen und mechanischen Verbindung mit einem Verbraucher 16b auf. Die Schnittstelle 14b ist auf einer Schnittstellenseite 18b des Akkupackgehäuses 12b angeordnet.

Die Schnittstelle 14b weist zwei Führungsschienen 34b (in den Figuren 4 und 5 ist jeweils nur eine der zwei Führungsschienen 34b dargestellt) auf. Die Schnittstelle 14b weist zumindest eine flexible Einheit 36b auf. Die flexible Einheit 36b ist zumindest teilweise an den Führungsschienen 34b angeordnet. Die flexible Einheit 36b ist dazu vorgesehen, Stöße auf den Verbraucher und/oder die Akkupackvorrichtung 10b, vorzugsweise die Schnittstelle 14b und/oder das Akkupackgehäuse 12b, zu dämpfen.

Die flexible Einheit 36b weist mehrere flexible, vorzugsweise elastische, Elemente 38b auf (in den Figuren 4 und 5 sind lediglich zwei der mehreren flexiblen Elemente 38b dargestellt). Die flexiblen Elemente 38b sind auf einer dem Akkupackgehäuse 12b zugewandten Seite 40b der Führungsschienen 34b angeordnet. Alternativ ist denkbar, dass die flexible Einheit 36b lediglich ein flexibles Element 38b aufweist.

Die flexiblen Elemente 38b sind auf einer dem Akkupackgehäuse 12b gegenüberliegenden Oberfläche 70b der Führungsschienen 34b angeordnet. Die flexiblen Elemente 38b sind zwischen der jeweiligen Führungsschiene 34b und dem Akkupackgehäuse 12b angeordnet. Die flexiblen Elemente 38b sind beabstandet zu dem Akkupackgehäuse 12b angeordnet. Die flexiblen Elemente 38b sind jeweils an einer der Führungsschienen 34b befestigt. Die flexiblen Elemente 38b sind in Richtung der jeweiligen Führungsschiene 34b, vorzugsweise elastisch, auslenkbar, bevorzugt um Stöße auf die jeweilige Führungsschiene 34b abzudämpfen. Es ist denkbar, dass die flexiblen Elemente 38b einstückig mit der jeweiligen Führungsschiene 34b ausgebildet sind, oder dass die flexiblen Elemente 38b lösbar, insbesondere zerstörungsfrei lösbar, an der jeweiligen Führungsschiene 34b befestigt sind. Es ist beispielsweise denkbar, dass die flexiblen Elemente 38b durch Umspritzung, Verkrallen, Heißverstemmen oder dergleichen an der jeweiligen Führungsschiene 34b befestigt sind. Die flexiblen Elemente 34b liegen in einem an dem Verbraucher angeordneten Zustand der Schnittstelle 14b an dem Verbraucher 16b, insbesondere an einer Akkupackschnittstelle 72b des Verbrauchers 16b, an. Die flexiblen Elemente 38b sind in einem an der Akkupackvorrichtung 10b angeordneten Zustand des Verbrauchers 16b vorgespannt. Eine Vorspannung der flexiblen Elemente 38b ist insbesondere durch eine Verbindung des Verbrauchers 16b mit der Schnittstelle 14b erzeugbar.

Alternativ oder zusätzlich ist auch denkbar, dass die flexible Einheit 36b zumindest ein flexibles, vorzugsweise elastisches, Element 38b aufweist, welches auf einer dem Akkupackgehäuse 12b abgewandten Seite auf zumindest einer der Führungsschienen 34b angeordnet ist. Ferner ist alternativ oder zusätzlich denkbar, dass die flexible Einheit 38b zumindest ein flexibles, vorzugsweise elastisches, Element 38b aufweist, welches an dem Akkupackgehäuse 12b angeordnet, vorzugsweise befestigt ist, bevorzugt auf der Schnittstellenseite 18b.

Die flexiblen Elemente 38b sind als Blattfedern ausgebildet. Die flexiblen Elemente 38b sind als Stanzbiegeteile ausgebildet. Die flexiblen Elemente 38b können aus zumindest einem Metall, aus einem Kunststoff oder dergleichen ausgebildet sein. Alternativ ist auch denkbar, dass zumindest ein Teil der flexiblen Elemente 38b als gummielastische Elemente, beispielsweise als eine Gummiplatte, als ein Gummiwürfel oder dergleichen, als eine Schraubenfeder, als eine Schenkelfeder oder dergleichen ausgebildet sind.

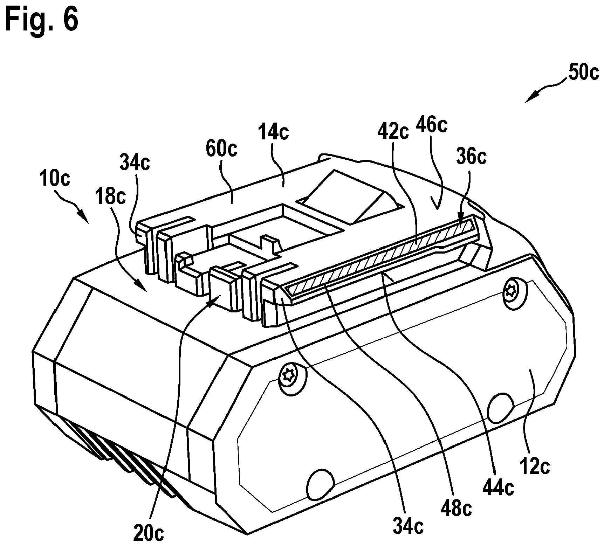

Figur 6 zeigt einen Akkupack 50c mit einer Akkupackvorrichtung 10c. Die Akkupackvorrichtung 10c weist ein Akkupackgehäuse 12c auf. Die Akkupackvorrichtung 10c weist zumindest eine Schnittstelle 14c zu einer elektrischen und mechanischen Verbindung mit einem Verbraucher auf. Die Schnittstelle 14c ist auf einer Schnittstellenseite 18c des Akkupackgehäuses 12c angeordnet.

Die Schnittstelle 14c weist zwei Führungsschienen 34c auf. Die Schnittstelle 14c weist zumindest eine flexible Einheit 36c auf. Die flexible Einheit 36c ist an den Führungsschienen 34c angeordnet. Die flexible Einheit 36c weist zwei flexible, vorzugsweise elastische, Elemente 42c, auf (in Figur 6 ist lediglich eines der zwei flexiblen Elemente 42c dargestellt). Alternativ ist denkbar, dass die flexible Einheit 36c lediglich ein flexibles Element 42c oder mehr als zwei flexible Elemente 42c aufweist. Die flexiblen Elemente 42c sind jeweils zwischen zwei zueinander zumindest im Wesentlichen parallel verlaufenden Montagerippen 44c, 46c der Führungsschiene 34c angeordnet (in Figur 6 sind lediglich die Montagerippen 44c, 46c von einer der zwei Führungsschienen 34c mit Bezugszeichen versehen).

Die Montagerippen 44c, 46c weisen jeweils Führungsflächen auf, entlang derer der Verbraucher bei einer Montage an und/oder einer Demontage von der Akkupackvorrichtung 10c führbar ist. Die Montagerippen 44c, 46c sind auf zueinander abgewandten Seiten der jeweiligen Führungsschiene 34c angeordnet. Eine Montagerippe 44c der Montagerippen 44c, 46c ist auf einer zu dem Akkupackgehäuse 12c zugewandten Seite der jeweiligen Führungsschiene 34c angeordnet. Eine weitere Montagerippe 46c der Montagerippen 44c, 46c ist auf einer zu dem Akkupackgehäuse 12c abgewandten Seite der jeweiligen Führungsschiene 34c angeordnet. Die weitere Montagerippe 46c ist stärker ausgebildet als die Montagerippe 44c. Alternativ ist denkbar, dass die Montagerippe 44c und die weitere Montagerippe 46c die gleiche Stärke aufweisen, oder dass die Montagerippe 44c stärker ausgebildet ist als die weitere Montagerippe 46c.

Die Montagerippen 44c, 46c verlaufen zumindest im Wesentlichen parallel zueinander. Die Montagerippen 44c, 46c verlaufen zumindest im Wesentlichen parallel zu einer Montagerichtung und/oder zu Haupterstreckungsachsen der Führungsschienen 34c. Alternativ ist denkbar, dass die Montagerippen 44c, 46c winklig zueinander verlaufen. Alternativ ist auch denkbar, dass die Montagerippen 44c, 46c winklig zu der Montagerichtung und/oder zu den Haupterstreckungsachsen der Führungsschienen 34c verlaufen.

Die flexiblen Elemente 42c erstrecken sich jeweils zumindest über einen Teil einer maximalen Längserstreckung der jeweiligen Führungsschiene 34c, insbesondere über zumindest 25 %, vorzugsweise über zumindest 50 % der maximalen Längserstreckung und bevorzugt zumindest im Wesentlichen über die gesamte maximale Längserstreckung der jeweiligen Führungsschiene 34c, insbesondere über zumindest 75 % und besonders bevorzugt über zumindest 90 % der maximalen Längserstreckung der jeweiligen Führungsschiene 34c.

Die Führungsschienen 34c weisen jeweils eine Aufnahmekammer 48c für jeweils eines der flexiblen Elemente 42c auf (in Figur 6 ist lediglich eine der Aufnahmekammern 48c dargestellt). Die Aufnahmekammern 48c sind im montierten Zustand einseitig offen ausgebildet. Die Aufnahmekammern 48c erstrecken sich jeweils zumindest über einen Teil einer maximalen Längserstreckung der jeweiligen Führungsschiene 34c, insbesondere über zumindest 25 %, vorzugsweise über zumindest 50 % der maximalen Längserstreckung und bevorzugt zumindest im Wesentlichen über die gesamte maximale Längserstreckung der jeweiligen Führungsschiene 34c, insbesondere über zumindest 75 % und besonders bevorzugt über zumindest 90 % der maximalen Längserstreckung der jeweiligen Führungsschiene 34c. Die Aufnahmekammern 48c sind zwischen der Montagerippe 44c und der weiteren Montagerippe 46c der jeweiligen Führungsschiene 34c angeordnet. Es ist auch denkbar, dass die Führungsschienen 34c mehrere Aufnahmekammern 48c für jeweils ein flexibles, insbesondere elastisches, Element 42c aufweisen. Ferner ist denkbar, dass in den Aufnahmekammern 48c jeweils mehrere flexible, insbesondere elastische, Elemente 42c anordenbar sind.

Die flexiblen Elemente 42c sind als flexible Schichtelemente ausgebildet. Die flexiblen Elemente 42c sind jeweils als eine Elastomerfüllung ausgebildet. Die Elastomerfüllung ist insbesondere aus entropieplastischen Material ausgebildet. Die flexiblen Elemente 42c sind zumindest im Wesentlichen plattenförmig ausgebildet. Alternativ ist jedoch auch denkbar, dass die flexiblen Elemente 42c eine andere, insbesondere von einer zumindest im Wesentlichen plattenförmigen Form verschiedene, Form aufweisen, beispielsweise rohrförmig, balkenförmig, prismenförmig, oder dergleichen. Die flexiblen Elemente 42c füllen die jeweilige Aufnahmekammer 48c zumindest im Wesentlichen vollständig aus. Es ist denkbar, dass die flexiblen Elemente 42c in der jeweiligen Aufnahmekammer 48c verklemmt und/oder verklebt sind. Ein Schnittstellengehäuse 60c der Schnittstelle 14c, insbesondere die Führungsschienen 34c, sind insbesondere zumindest teilweise, bevorzugt zumindest im Wesentlichen vollständig, aus einem Hartplastik gebildet. Die flexiblen Elemente 42c weisen eine Härte auf, die geringer ist als eine Härte der Führungsschienen 34c. Die flexiblen Elemente weisen eine Flexibilität auf, die höher ist als eine Flexibilität der Führungsschienen 34c. Die flexiblen Elemente 34c weisen eine Elastizität auf, die höher ist als eine Elastizität der Führungsschienen 34c.

Alternativ ist denkbar, dass die Aufnahmekammern 48c im montierten Zustand vollständig geschlossen ausgebildet sind. Es ist alternativ denkbar, dass die flexiblen Elemente 42c zumindest teilweise oder zumindest im Wesentlichen vollständig von dem Schnittstellengehäuse 60c der Schnittstelle 14c umspritzt sind.

## Patentansprüche

1. Akkupackvorrichtung (10) mit zumindest einem Akkupackgehäuse (12) und mit zumindest einer Schnittstelle (14) zu einer elektrischen und mechanischen Verbindung mit einem Verbraucher, die auf einer Schnittstellenseite (18) des Akkupackgehäuses (12) angeordnet ist, wobei die Schnittstelle (14) zumindest eine Kontaktaufnahme (20) aufweist, die benachbart zu einer Wandung (22) der Akkupackvorrichtung (10) angeordnet ist, **dadurch gekennzeichnet, dass** die Wandung (22) gekrümmt ausgebildet ist.

2. Akkupackvorrichtung (10) nach Anspruch 1, **dadurch gekennzeichnet, dass** das Akkupackgehäuse (12) auf der Schnittstellenseite (18) eine erste Oberfläche (24) und eine gegenüber der ersten Oberfläche (24) vertiefte zweite Oberfläche (26) aufweist, wobei die Wandung (22) zumindest teilweise in einem Bereich (30) der zweiten Oberfläche (26) angeordnet ist.

3. Akkupackvorrichtung (10) nach Anspruch 2, **dadurch gekennzeichnet, dass** zumindest ein einer Montagerichtung (28) der Schnittstelle (14) zugewandter Teil der Wandung (22) in dem Bereich (30) der zweiten Oberfläche (26) angeordnet ist.

4. Akkupackvorrichtung (10) nach Anspruch 2 oder 3, **dadurch gekennzeichnet, dass** der Bereich (30) der zweiten Oberfläche (26) zumindest auf einer einer Montagerichtung (28) der Schnittstelle (14) zugewandten Seite (32) der Schnittstelle (14) angeordnet ist.

5. Akkupackvorrichtung (10b; 10c) nach einem der vorhergehenden Ansprüche, **dadurch gekennzeichnet, dass** die Schnittstelle (14b; 14c) zumindest eine Führungsschiene (34b; 34c) und zumindest eine flexible Einheit (36b; 36c) aufweist, die zumindest teilweise an der Führungsschiene (34b; 34c) angeordnet ist.

6. Akkupackvorrichtung (10b) nach Anspruch 5, **dadurch gekennzeichnet, dass** die flexible Einheit (36b) zumindest ein flexibles, vorzugsweise elastisches, Element (38b) aufweist, welches auf einer dem Akkupackgehäuse (12b) zugewandten Seite (40b) der Führungsschiene (34b) angeordnet ist.

7. Akkupackvorrichtung (10b) nach Anspruch 6, **dadurch gekennzeichnet, dass** das flexible Element (38b) als eine Blattfeder ausgebildet ist.

8. Akkupackvorrichtung (10c) nach Anspruch 5, **dadurch gekennzeichnet, dass** die flexible Einheit (36c) zumindest ein flexibles, vorzugsweise elastisches Element (42c), aufweist, welches zwischen zwei zueinander zumindest im Wesentlichen parallel verlaufenden Montagerippen (44c, 46c) der Führungsschiene (34c) angeordnet ist.

9. Akkupackvorrichtung (10c) nach Anspruch 5, **dadurch gekennzeichnet, dass** die zumindest eine Führungsschiene (34c) eine Aufnahmekammer (48c) für ein flexibles, insbesondere elastisches, Element (42c) aufweist, wobei die Aufnahmekammer (48c) im montierten Zustand vollständig geschlossen oder einseitig offen ausgebildet ist.

10. Akkupackvorrichtung (10c) nach Anspruch 9, **dadurch gekennzeichnet, dass** das flexible, insbesondere elastische, Element (42c) als eine Elastomerfüllung ausgebildet ist, wobei die Elastomerfüllung insbesondere aus entropieplastischen Material ausgebildet ist.

11. Akkupack (50) mit einer Akkupackvorrichtung (10) nach einem der vorhergehenden Ansprüche.

12. Verfahren zur Herstellung einer Akkupackvorrichtung (10), insbesondere nach einem der vorhergehenden Ansprüche 1 bis 9, mit einem Akkupackgehäuse (12) und mit zumindest einer Schnittstelle (14) zu einer elektrischen und mechanischen Verbindung mit einem Verbraucher, wobei die Schnittstelle (14) zumindest eine Kontaktaufnahme (20) aufweist, die benachbart zu einer Wandung (22) der Akkupackvorrichtung (10) angeordnet ist, **dadurch gekennzeichnet, dass** die Wandung (22) gekrümmt ausgebildet wird.
